**Europäisches Patentamt**

**European Patent Office**

**Office européen des brevets**

(11) Veröffentlichungsnummer: **0 337 181**

**A1**

(12)

# EUROPÄISCHE PATENTANMELDUNG

(21) Anmeldenummer: **89105388.6**

(51) Int. Cl.⁴: **B65D 85/57 , G11B 33/04**

(22) Anmeldetag: **25.03.89**

(30) Priorität: **09.04.88 DE 8804701 U**

(43) Veröffentlichungstag der Anmeldung:
**18.10.89 Patentblatt 89/42**

(84) Benannte Vertragsstaaten:
**AT BE DE FR GB IT NL**

(71) Anmelder: **Tribbels, Michael**
**Hauptstrasse 41**
**D-5112 Baesweiler(DE)**

(72) Erfinder: **Königs, Günter**
**Hauptstrasse 24**
**D-5112 Baesweiler-Setternich(DE)**

(74) Vertreter: **von Creytz, Dietrich, Dipl.-Phys.**
**Tannenweg 25**
**D-5144 Wegberg(DE)**

(54) **Verpackung einer Compact Disc.**

(57) Es soll eine Verpackung für eine einzelne Compact-Disc (2) geschaffen werden, die mit weniger Aufwand als bisher herzustellen ist, beim Hinfallen nicht zerbricht, einen Aufdruck auf der Außenfläche erlaubt und in derselben Außendimension wie bisherige Kassetten herzustellen ist. Erfindungsgemäß wird ein die Kassette aufnehmender Träger (1) als selbsttragendes Kunststoff-Tiefziehteil zum füllenden Einschub in eine aus Kunstdruckkarton bestehende Faltschachtel (21) ausgebildet. Dadurch wird erreicht, daß die Hülle der Verpackung zugleich aus stoßfestem und bedruckbarem Material herzustellen ist und die Compact-Disc trotzdem in einem schützenden Träger (1) aufgenommen wird.

Fig. 1

EP 0 337 181 A1

## Verpackung einer Compact Disc

Die Erfindung betrifft eine Verpackung einer einzelnen Compact Disc bzw. CD mit einem eine Auflagefläche mit in der Mitte angeordnetem, federnd klemmendmn Kronenaufnehmer aufweisenden, rechteckigen Träger aus Kunststoff, wobei der Durchmesser der CD fast ebensogroß wie die gegebenenfalls kürzere Seitenlänge des Trägers ist und wobei die von der CD nicht bedeckten Eckteile des Trägers gegenüber der Auflagefläche erhabene Bereiche aufweisen.

Eine dem Audio-PCM-System (PCM = Puls-Code-Modulation) angehörende Compact Disc (CD) ist eine transparente Platte mit metallisierten Vertiefungen, die zur Wiedergabe der in der Platte gespeicherten Informationen mit einem Laserstrahl durch die Platte hindurch abgetastet werden. Obwohl die die Informationen enthaltende Fläche innerhalb der CD eingeschlossen ist und durch Kratzer, Staub oder dergleichen nicht unmittelbar beschädigt werden kann, ist es trotzdem erwünscht, die von dem Laserstrahl zu beaufschla gende CD-Seite vor Beschädigungen zu schützen. Aus diesem Grunde sind CD-Kassetten in Gebrauch, in denen jede einzelne Platte an ihrem Mittelloch auf einem federnd klemmenden Kronenaufnehmer so gehalten wird, daß die beim Abtasten vom Laser zu bestrahlende Fläche weder schädlichen äußeren Einwirkungen ausgesetzt werden noch die darunterliegende Auflagefläche der Kassette berühren kann. Die Kassette besitzt einen etwa quadratischen Klappdeckel, der die ganze (metallisierte) Seite einer eingesetzten CD überdeckt. Aus Gründen der Platzersparnis soll dabei der Durchmesser der CD fast ebenso groß wie die gegebenenfalls kürzere Seitenlänge des annähernd quadratischen Deckels und damit der ganzen Kassette sein. Der Deckel wird mit Hilfe eines Scharniers an einem Unterteil der Kassette befestigt.

In die übliche Kassette wird ein Träger für die CD integriert. Der Träger besitzt eine Auflagefläche mit in der Mitte angeordnetem Aufnehmer. An den von der kreisrunden CD nicht bedeckten Eckteilen des Trägers werden erhabene Bereiche vorgesehen, die sich jeweils mit fast einem Viertelkreis um die Auflagefläche des Trägers und damit um eine eingesetzte CD herumerstrecken. Da die Kassette einen klappbaren Deckel haben soll, wird sie aus entsprechend stabilem - in der Regel durchsichtigem - Hartkunststoff hergestellt. Ein solches Material läßt Aufdrucke, etwa für eine Bedienungsanleitung, nicht zu. Es ist daher erforderlich, in die Kassette ein zusätzliches Erläuterungsheft einzulegen. Ein weiterer Nachteil der bekannten Kassette besteht darin, daß sie durch Stöße, insbesondere beim Hinfallen, leicht zerbrechen kann.

Der Erfindung liegt die Aufgabe zugrunde, eine CD-Verpackung zu schaffen, die mit weniger Aufwand als bisher herzustellen ist, beim Hinfallen nicht zerbricht, einen Aufdruck auf den Außenflächen für alle erforderlichen Beschriftungen, Zeichnungen bzw. Erläuterungen erlaubt, in derselben Außendimension wie bisherieg Kassetten herzustellen ist und trotzdem auf einfachste Weise zu handhaben ist.

Die erfindungsgemäße Lösung besteht für die eingangs genannte Verpackung darin, daß der Träger als selbsttragendes Kunststoff-Tief- ziehteil zum füllenden Einschub in eine aus Kunstdruckkarton bestehende, rechteckige Flachschachtel ausgebildet ist, daß die Flachschachtel gegenüberliegende, den Umriß der Auflagefläche des Trägers entsprechend bemessene Ober- bzw. Unterseiten aufweist und an drei die Kanten von Ober- und Unterseiten miteinander verbindenden Schmalseiten verschlossen ist, daß an eine Kante der vierten Schmalseite eine Deckelteil mit einer die Schmalseite definierenden Doppelnut angeformt ist und daß der Träger in jedem der vier nicht von der CD bedeckten Eckteile eine Aufwölbung besitzt, deren Höhe über der Auflagefläche deutlich größer als der Abstand der empfindlichen CD-Fläche einer aufgelegten CD und der Auflagefläche ist.

Durch die Erfindung wird erreicht, daß die Hülle der Verpackung aus Kunstdruckkarton also aus zugleich stoßfestem und bedruckbarem Material, herzustellen ist und die CD trotzdem in einem schützenden und stabilisierenden Kunststoffträger aufgenommen wird. Der als Tiefziehteil ausgebildete Kunststoffträger soll eine äußere Form besitzen, die es erlaubt, ihn bequem in die Flachschachtel -von einer von deren Schmalseiten her - einzuschieben, ohne daß dabei eine aufgesetzte CD beschädigt werden könnte. Der Herstellungsaufwand für den Kunststoffträger und für die aus Kunstdruckkarton bestehende Flachschachtel ist wesentlich geringer - genaugenommen höchstens halb so groß -wie bisher für eine aus Kunststoff bestehende Kassette mit eingesetztem Träger und der Verpackung beizufügendem Erläuterungsheft. Das bisher in CD-Kassetten befindliche Erläuterungsheftchen kann entfallen, da die aus Kunstdruckkarton herzustellende neue Verpackung ausreichend Druckfläche für die erforderlichen Informationen besitzt. Die Fläche läßt sich durch Verlängerung eines über die Oberseite und eventuell auch über die Unterseite überschlagenden Deckels noch wesentlich vergrößern. Die Flachschachtel kann äußerlich fast identisch mit der bisherigen Hartkunststoff-Verpackung ausgebildet werden, insbesondere auch der kennzeichnende schwarze Balken, Titel - 090 - und Katalognummer sowie der Barcode lassen sich aufdrucken.

Die Handhabung der erfindungsgemäßen Verpackung ist an sich recht einfach, da der Träger gleitend auf dem flach abgeklappten Deckel - wie eine Schublade - in die Flachschachtel einzuschieben oder aus dieser herauszuziehen ist. Eine weitere Erleichterung - vor allem des Herausziehens - wird erreicht, wenn an die gegebenenfalls an die offene Schachtelkante angrenzenden Trägerkante ein Griff, insbesondere bereits beim Tiefziehen, angeformt wird. Der Griff kann sich über einen Teil oder über die ganze Trägerkante erstrecken. Im letzteren Fall dient er zusätzlich als Staubschutz. Der Griff wird vorteilhaft so hoch gemacht, daß seine Oberkante in etwa mit der Außenfläche der Oberseite der Schachtel fluchtet. Es kann zweckmäßig sein, an der angrenzenden Kante der Schachteloberseite eine dem Griff entsprechende Ausnehmung vorzusehen.

Das Tiefzieheil selbst, das heißt der Träger, kann aus einer dünnen, beispielsweise nur 0,5 mm starken, Folie, insbesondere aus PVC, hergestellt werden. Die nötige Stabilität wird in üblicher Weise durch Verformung erreicht. Insbesondere werden die in den Eckteilen der Auflagefläche vorgesehenen Aufwölbungen, beispielsweise mit in etwa Halbkugelform, zum Stabilisieren der Gesamtfläche herangezogen. Der Stabilisierung dienen auch Falzungen an der Ränder des Trägers. Auch der in der Mitte der Auflagefläche vorgesehene Kronenaufnehmer dient einem doppelten Zweck, nämlich der Stabilisierung der Fläche und dem klemmenden Festhalten einer zu verpackenden CD. Der Aufnehmer besitzt vorzugsweise eine ringförmige Aufnahmenut mit darunter in radialer Richtung vorstehenden Schulter, die eine Auflage des Randes des Mittellochs der CD ohne daß die vom Laserstrahl zu beleuchtende CD-Fläche kontaktiert werden müßte, gewährleistet.

Anhand der schematischen Darstellung eines Ausführungsbeispiels werden Einzelheiten der Erfindung erläutert. Es zeigen:

Fig. 1 eine Draufsicht auf einen Träger;

Fig. 2 eine Seitenansicht des Trägers;

Fig. 3 einen Zuschnitt der Flachschachtel; und

Fig. 4 einen Schnitt durch eine aus dem Zuschnitt nach Fig. 3 aufgerichtete Schachtel.

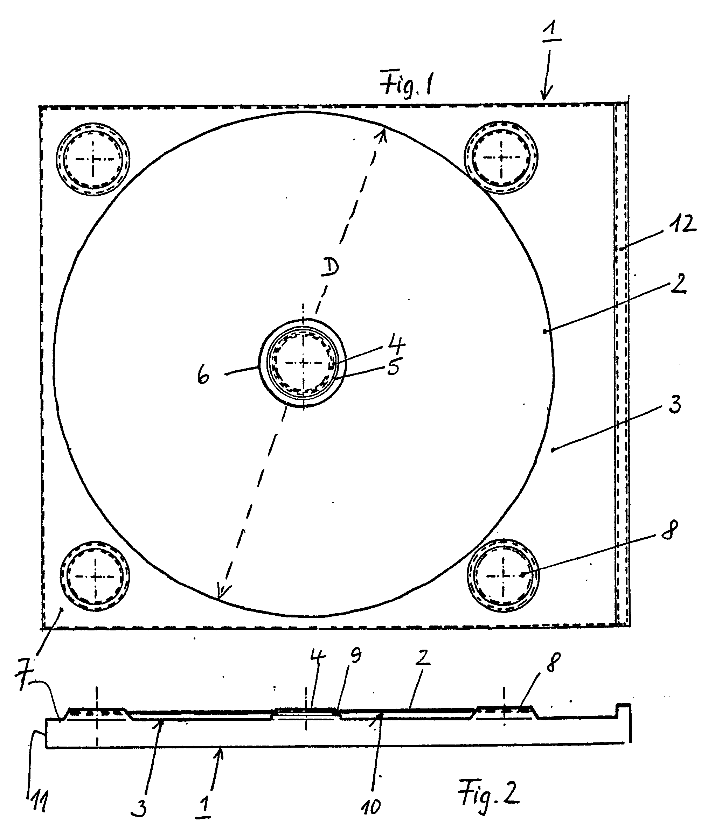

Ein im Maßstab etwa 1:1 in Fig. 1 und 2 insgesamt mit 1 bezeichneter Träger einer Compact Disc bzw. CD 2 besitzt in der Mitte einer Auflagefläche 3 einen Kronenaufnehmer 4, dessen Umfangsrand 5 leicht federnd gegen das Mittelloch 6 einer aufgesetzten CD 2 gedrückt wird, um die CD auf dem Träger 1 zu arretieren. Der Durchmesser D der CD 2 soll aus Platzersparnisgründen fast ebenso groß wie die Seitenlänge a der im wesentlichen quadratischen Aufnahmefläche 3 des Trägers 1 sein. Außerdem sollen die von der kreisrunden CD 2 nicht bedeckten Eckteile 7 des Trägers 1 gegenüber der Auflagefläche 3 erhabene Bereiche 8, vorzugsweise mit in etwa Halbkugelform oder mit Kegelstumpfform, besitzen. Eine auf dem Aufnehmer 4 arretierte CD 2 soll die Auflagefläche 3 nicht unmittelbar berühren. Daher besitzt der Aufnehmer 4 im Ausführungsbeispiel eine Schulter 9, die die CD 2 am Umfang ihres Mittellochs 6 trägt, so daß die empfindliche CD-Fläche 10 die Auflagefläche (3) nicht berühren kann.

Zum Stabilisieren des Trägers 1 kann dessen Umfangsrand teilweise oder ganz bereits beim Tiefziehen als nach unten stehender Rand 11, abgekantet werden. In einem vorteilhaften Ausführungsbeispiel wird an einer Trägerkante ein Griff 12 vorgesehen. Der Griff 12 kann beim Tiefziehen hergestellt werden. Besonders günstig kann es sein, eine ganze Längskante des Trägers 1 als Griff 12 auszubilden, weil dieser Griff (12) leichter zu fassen ist und zugleich als Staubschutz der nachfolgend beschriebenen Faltschachtel geeignet ist.

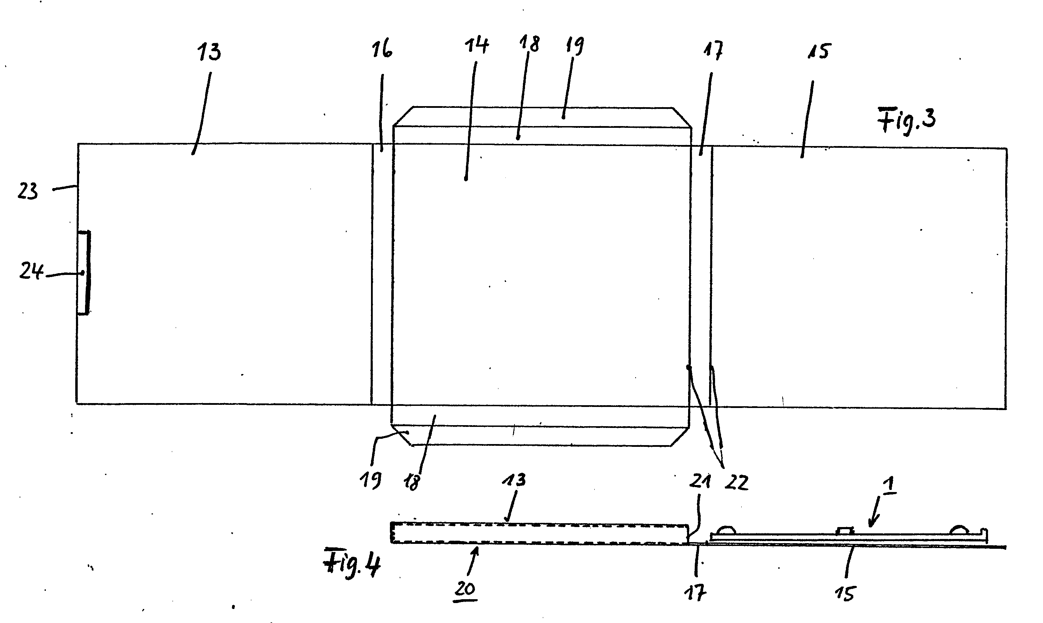

Die in Fig. 3 und 4 im Maßstab 1:2 dargestellte Flachschachtel besteht aus einer Oberseite 13, einer Unterseite 14, einem Deckel 15, die Oberseite 13 und die Unterseite 14 sowie die Unterseite 14 mit dem Deckel 15 verbindenden Schmalseiten 16 und 17 sowie an die restlichen Kanten der Unterseite 14 angeformten Schmalseiten 18 mit jeweils angrenzender Klebelasche 19.

In einem aufgerichteten Zuschnitt nach Fig. 3 wird eine zum Einschub eines symbolisch dargestellten Trägers 1 bereitgelegte Flachschachtel 20 im Schnitt dargestellt. Der Träger 1 wird auf dem flachliegenden Deckel 15 bereit zum Einschieben in die offene Schmalseite 21 der Flachschachtel 20 bereitgelegt. Wenn der Träger 1 ganz in die Flachschachtel 20 eingeschoben ist, wird der Deckel 15 unter Ausnutzung der an den beiden Längskanten der Schmalseite 17 vorgesehenen Doppelnuten 22 auf die Oberseite 13 der Flachschachtel 20 geklappt. Falls an der einen Längskante des Trägers 1 ein Griff 12 nach oben steht, kann es günstig sein, an der angrenzenden freien Kante (23) der Oberseite 13 eine entsprechende Daumenaussparung 43 vorzusehen.

Als Material für den Träger 1 wird in einem vorteilhaften Ausführungsbeispiel eine PVC-Folie mit etwa 0,5 mm Stärke vorgesehen. Eine solche Folie läßt sich in der gewünschten Weise tiefziehen. Die den Träger 1 bei Anwendung umgebende Flachschachtel (20) soll aus einem Kunstdruckkarton hergestellt werden, der an den Übergangskanten zwischen den Ober- und Unterseiten sowie am Deckel mit scharfen Rillungen bzw. Doppelnuten

versehen wird, damit ein sicherer Einschub und ein bequemes Herausziehen des Trägers 1 möglich ist und damit die ganze Verpackung in einem Regal in der bisher von einer Hartkunststoffkassette gewohnten Weise buchartig aufzustellen ist. Die Folie wird an verschiedenen Stellen, beispielsweise am Rand der Aufwölbungen 8 Bohrungen 25 auf, die es ermöglichen, die Folie beim Tiefziehen glatt und blasenfrei zu plazieren.

## Ansprüche

1. Verpackung einer einzelnen Compact Disc bzw. CD (2) mit einem eine Auflagefläche (3) mit in der Mitte angeordnetem, federnd klemmenden Kronenaufnehmer (4) aufweisenden, rechteckigen Träger (1) aus Kunststoff, wobei der Durchmesser (D) der CD fast ebenso groß wie die gegebenenfalls kürzere Seitenlänge (a) des Trägers (1) ist und wobei die von der CD nicht bedeckten Eckteile (7) des Trägers (1) gegenüber der Auflagefläche (3) erhabene Bereiche (8) aufweisen,
**dadurch gekennzeichnet,**
daß der Träger (1) als selbsttragendes Kunststoff-Tiefziehteil zum füllenden Einschub in eine aus Kunstdruckkarton bestehende, rechteckige Flachschachtel (20) ausgebildet ist, daß die Flachschachtel (2) gegenüberliegende, dem Umriß der Auflagefläche (3) des Trägers (1) entsprechend bemessene Ober- bzw. Unterseiten (13, 14) aufweist und an drei die Kanten von Ober- und Unterseiten (13, 14) miteinander verbindenden Schmalseiten (16, 18) verschlossen ist, daß an eine Kante der vierten Schmalseite (17) ein Deckelteil (15) mit einer eine die Schmalseite (17) definierenden Doppelnut (22) angeformt ist und daß der Träger (1) in jedem der nicht von der CD (2) bedeckten Eckteile (7) eine Aufwölbung (8) besitzt, deren Höhe über der Auflagefläche (3) deutlich größer als der Abstand zwischen der empfindlichen CD-Fläche (10) einer aufgelegten CD (2) und der Auflagefläche (3) ist.

2. Verpackung nach Anspruch 1,
**dadurch gekennzeichnet,**
daß das den Träger (1) bildende Tiefziehteil aus einer Kunststoff-Folie mit einer Stärke in der Größenordnung von 0,5 mm, insbesondere PVC-Folie, besteht.

3. Verpackung nach Anspruch 1 oder 2,
**dadurch gekennzeichnet,**
daß die Aufwölbungen (8) in den nicht von der CD (2) bedeckten Eckteilen (7) des Trägers (1) etwa halbkugelförmig ausgebildet sind.

4. Verpackung nach einem der Ansprüche 1 bis 3,
**dadurch gekennzeichnet,**
daß an das den Träger (1) bildende Tiefziehteil an einer Kante ein über die Oberseite der Auflagefläche (3) überstehender Griff (12), insbesondere beim Tiefziehen, angeformt ist.

5. Verpackung nach Anspruch 4,
**dadurch gekennzeichnet,**
daß sich der Griff (12) im wesentlichen über die Breite einer Kante des Trägers (1) erstreckt.

6. Verpackung nach Anspruch 4 oder 5,
**dadurch gekennzeichnet,**
daß dem an das Tiefziehteil angeformte Griff (12) eine Ausnehmung (24) an der offenen Kante (23) an der Oberseite (13) der Schachtel (20) entspricht.

7. Verpackung nach einem der Ansprüche 5 bis 6,
**dadurch gekennzeichnet,**
daß die Oberkante des Griffs (12) bei in die Schachtel (20) eingeschobenem Träger (1) in etwa mit der Außenseite der Schachteloberseite (13) fluchtet.

8. Verpackung nach einem der Ansprüche 1 bis 7,
**dadurch gekennzeichnet,**
daß der Deckel (15) der Schachtel (20) die Schachteloberseite (13) ganz überdeckt.

9. Verpackung nach Anspruch 8,
**dadurch gekennzeichnet,**
daß das Deckelteil (15) sich mit einer weiteren Doppelnut um die der offenen Schmalseite (17) gegenüberliegende Schmalseite (16) und mit einer sich anschließenden Deckelverlängerung teilweise oder ganz über die Schachtelunterseite (14) zuklappend ausgebildet ist.

10. Verpackung nach einem der Ansprüche 1 bis 9,
**dadurch gekennzeichnet,**
daß die Außenflächen der Schachtel (20) einschließlich der Deckelflächen als Aufdruckflächen, insbesondere für Titel, Katalognummer, Bedienungsanweisung und dergleichen, ausgebildet sind.

EP 0 337 181 A1

Fig. 1

*1*

*12*

D

*4*
*5*
*6*

*2*

*3*

*8*

*7*

*11*  *3*  *1*

*4*  *9*  *2*  *8*

*10*

Fig. 2

EP 0 337 181 A1

13    16    14  18  19    17    15    Fig.3

23

24

19  18    21  22

13    1

Fig.4    20    17    15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 020 219 (THOMSON-BRANDT) <br> * Figuren 1,2; Seite 3, Zeilen 5-23; Seite 5, Zeilen 5-24; Seite 4, Zeilen 9-13 * <br> --- | 1,2,10 | B 65 D 85/57 <br> G 11 B 33/04 |
| A | US-A-4 709 812 (D.W. KOSTERKA) <br> * Figuren 2,7,7a,8; Spalte 1, Zeilen 43-49; Spalte 2, Zeilen 37-53; Spalte 3, Zeilen 5-25; Spalte 4, Zeilen 13-34 * <br> --- | 1,8,10 | |
| A | US-A-4 623 062 (W. CHASE et al.) <br> * Figuren 2,3; Spalte 2, Zeilen 46-59; Spalte 3, Zeile 58 - Spalte 4, Zeile 14; Spalte 6, Zeilen 48-59 * <br> --- | 1,2,4,5 ,10 | |
| A | DE-A-3 120 754 (H.D. GRUNDMANN) <br> * Figuren 9,11,13; Seite 17, Zeilen 8-21; Seite 18, Zeile 18 - Seite 19, Zeile 26 * <br> ----- | 1,8,9, 10 | |

**RECHERCHIERTE SACHGEBIETE (Int. Cl.4)**

B 65 D
G 11 B

Der vorliegende Recherchenbericht wurde für alle Patentansprüche erstellt

| Recherchenort | Abschlußdatum der Recherche | Prüfer |
|---|---|---|
| DEN HAAG | 15-06-1989 | PERNICE,C. |